# EUROPÄISCHE PATENTSCHRIFT

(11) **EP 1 479 474 B1**
(45) Veröffentlichungstag und Bekanntmachung des Hinweises auf die Patenterteilung: **25.02.2015**
(21) Anmeldenummer: 04102174.2
(22) Anmeldetag: 18.05.2004
(51) Int. Cl.: B23P 15/00, C23C 2/06, C25D 7/06, C23C 2/02

(54) **Verfahren zur Verzinkung eines metallischen Flachmaterials**
Method for galvanizing a metallic flat material
Procédé de galvanisation d'un matériau métallique plat

(30) Priorität: 20.05.2003 DE 10322679
(43) Veröffentlichungstag der Anmeldung: 24.11.2004
(73) Patentinhaber: HILTI Aktiengesellschaft, 9494 Schaan (LI)
(72) Erfinder: Schubert, Gernot, 6800, Feldkirch (AT); Marg, Dieter, 6800, Feldkirch (AT); Burtscher, Norbert, 6712, Thüringen (AT); Steingruber, Adrian, 86836, Graben (DE)
(74) Vertreter: Hilti Aktiengesellschaft Corporate Intellectual Property

(56) Entgegenhaltungen:
- CH-A5- 634 120
- DE-A1- 10 106 474
- FR-A- 2 650 726
- US-A- 3 696 503
- US-A- 4 876 837
- US-A- 5 059 455
- US-A- 5 927 041
- PATENT ABSTRACTS OF JAPAN Bd. 003, Nr. 157 (C-068), 22. Dezember 1979 (1979-12-22) -& JP 54 132435 A (MATSUSHITA ELECTRIC IND CO LTD), 15. Oktober 1979 (1979-10-15)

## Beschreibung

### Technisches Gebiet

Die Erfindung betrifft ein Verfahren zur Herstellung eines verzinkten und mit Öffnungen versehenen metallischen Flachmaterials. Des Weiteren betrifft die Erfindung ein verzinktes Profil.

### Stand der Technik

Metallisches Flachmaterial, wie auch metallische Profile müssen vor Korrosion geschützt werden. Dazu wird das metallische Flachmaterial beispielsweise mit einer Beschichtung aus Zink, Aluminium, Nickel, Kupfer oder Rostschutzfarbe versehen. Des Weiteren werden Beschichtungen aus Kunststoff, z. B. auf PVC-, Polyester oder Acrylatbasis als Korrosionsschutz verwendet.

Bei den bekannten Verfahren zur Herstellung von verzinktem und mit Öffnungen versehenen metallischen Flachmaterial wird vom Stahlhersteller das Flachmaterial hergestellt und galvanisch verzinkt oder feuerverzinkt. Anschliessend werden die Öffnungen an dem Flachmaterial ausgestanzt und das Flachmaterial auf die gewünschte Länge abgelängt. Wird das Flachmaterial zusätzlich beispielsweise mit einer Verzahnung, beispielsweise mit einer Rändelung versehen, wird die zumeist in geringer Schichtstärke aufgebrachte Zinkschicht in diesem Bereich beschädigt. Somit ergeben sich mehrere Kanten und Flächen an dem verzinkten Flachmaterial, die nicht mehr durch eine ausreichende Zinkschicht geschützt sind. Die ungeschützten Kanten und Flächen müssen zur Gewährleistung der Gebrauchstauglichkeit des Halb- und Fertigprodukts in zusätzlichen Arbeitsschritten, mit zumeist aufwändigen Vorrichtungen erneut mit einer Schutzschicht, vorzugsweise mit einer Verzinkung versehen werden. Aus der DE 101 06 474 A1 ist beispielsweise ein Verfahren sowie eine Vorrichtung zum nachträglichen Aufbringen einer Korrosionsschicht auf eine Kante eines metallischen Flächenmaterials bekannt. Weiter lässt sich das verzinkte metallische Flachmaterial nur bedingt in eine Profilform profilieren, ohne dass die aufgebrachte Zinkbeschichtung dabei Schaden nimmt. Vor der Profilierung des metallischen Flachmaterials wird dieses zudem auf die gewünschte Breite gespalten, womit zusätzliche ungeschützte Kanten an dem Halbprodukt entstehen. Um der Korrosionsanfälligkeit aus metallischem Flachmaterial gefertigten Profilen vorzubeugen, wird zu deren Herstellung unverzinktes Warmblech verwendet. Sämtliche Bearbeitungs- und Umformvorgänge werden an dem unverzinkten Blech vorgenommen und das unverzinkte Profil wird als Stückgut beispielsweise feuerverzinkt.

Nachteilig an diesem bekannten Verfahren ist, dass das Handling der Profile beim Verzinken aufwändig und kostenintensiv ist, da diese Profile zumeist im Vertikalverzinkungsverfahren mit der vor Korrosion schützenden Zinkschicht versehen werden müssen. Ein weiterer Nachteil ist der aufwändige Transport der profilierten Profile in eine spezialisierte Verzinkerei, wobei bei langen Profilen der Transport beispielsweise mit Spezialfahrzeugen erfolgt.

Die US 3,696,503 A betrifft ein Verfahren zum Galvanisieren von Bandstahl, bei dem ein kontinuierliches Band in ein Bad aus geschmolzenem Zink Eintritt. Dabei kann vorgesehen sein, das Band vor dem Eintritt in das Bad zu verformen. Insbesondere kann vorgesehen sein, vor dem Eintritt in das Bad Löcher im Band auszustanzen.

Die US 5,059,455 A beschreibt ein Verfahren, bei dem perforiertes Stahlflachmaterial galvanisiert wird.

Aus der US 5,927,041 A geht eine Befestigungsschiene hervor, die aus einem galvanisierten Stahlmaterial hergestellt ist. Die CH 634120 beschreibt einen aus einem sendzimirverzinkten Stahlband hergestellten Dachschneefänger. Die US 4,876,837 A offenbart ein Metallprodukt, zu dessen Herstellung ein Flachmaterial erst galvanisiert und dann umgeformt wird. Die FR 2,650,726 beschreibt einen Zaunpfahl, zu dessen Herstellung ein Flachmaterial erst umgeformt und dann galvanisiert wird.

### Darstellung der Erfindung

Aufgabe der Erfindung ist es, ein Verfahren zu schaffen, mit dem eine kostengünstige Verzinkung eines mit Öffnungen versehenen, metallischen Flachmaterials erfolgen kann, wobei die Anzahl der beim Bearbeitungsvorgang entstehenden, ungeschützten Kanten und deren Nachbehandlung auf ein Minimum reduziert wird.

Die Aufgabe ist durch die Merkmale der unabhängigen Ansprüche gelöst. Weitere vorteilhafte Weiterbildungen sind in den Unteransprüchen dargelegt.

Gemäss der Erfindung weist ein Verfahren zur Herstellung eines verzinkten und mit Öffnungen versehenen metallischen Flachmaterials die folgenden Verfahrensschritte auf:
a) Stanzen der Öffnungen in das Flachmaterial;
b) anschliessend Verzinken des Flachmaterials in einem Durchlaufverfahren; und
c) Ablängen des Flachmaterials auf die gewünschte Länge;
wobei an dem Flachmaterial nach dem Verzinken des Flachmaterials Verzahnungen aufgewalzt werden

Als Rohmaterial wird beispielsweise ein unbeschichtetes metallisches Flachmaterial, z. B. ein Warmblech oder Kaltblech aus Stahl, verwendet, das auf einen Haspel der weiteren Bearbeitung zugeführt wird. In einem ersten Bearbeitungsschritt werden in das unbeschichtete Blech die gewünschten Öffnungen, z. B. Langlöcher, gestanzt.

Zumeist sind der Hersteller der Öffnungen und der Verzinker nicht identisch, so dass das gestanzte Flachmaterial erneut aufgewickelt wird. Ein wesentlicher Vorteil des Haspels als Transportverpackung ist das einfache Handling des Haspels, z. B. der einfache Umlad mit einem Gabelstapler, Hallenkran, etc., und die Vielfalt der Transportmöglichkeiten des Haspels, z. B. mit dem Lastwagen, mit der Bahn oder mit dem Schiff. Verfügt der Bearbeiter über eine eigene, geeignete Verzinkungsanlage, kann das gestanzte Flachmaterial direkt von der Stanzmaschine ohne ein erneutes Aufrollen des Flachmaterials auf einen Haspel dem Verzinkungsvorgang zugeführt werden.

In der Verzinkerei wird das gestanzte Blech von dem Haspel abgerollt und die Verzinkung im Durchlaufverfahren durchgeführt. Über eine Rollenvorrichtung kann das gestanzte Blech mehrmals in ein Durchlaufbad eingetaucht werden, so dass die aufgebrachte Zinkschichtdicke in Abhängigkeit der weiteren Verwendung des metallischen Flachmaterials anpassbar ist. Bei diesem Verfahrensschritt wird das gesamte metallische Flachmaterial, inklusive den Seitenkanten, die beim Stanzen der Öffnungen entstanden sind, mit der als Korrosionsschutz dienenden Zinkschicht versehen. Anschliessend wird das verzinkte, metallische Flachmaterial auf die gewünschte Länge abgelängt. Bei Bedarf ist die, beim Ablängen entstehende ungeschützte Schnittkante am metallischen Flachmaterial mit einer KorrosionsSchutzschicht zu versehen.

Im Gegensatz zu den bekannten Verfahren ist beim erfindungsgemässe n Verfahren der Schutz vor Korrosion des bearbeiteten Flachmaterials massgeblich verbessert, da die Anzahl von Übergängen unterschiedlich hergestellter Schutzschichten beim erfindungsgemässen Verfahren auf ein Minimum reduziert ist. Jeder Übergang der Zinkschichten stellt eine mögliche Gefahrenstelle für Korrosion dar, da diese Übergangsbereiche oftmals nicht absolut dichtend ausgebildet werden können. Andererseits ist beim erfindungsgemässen Verfahren das Handling des zu bearbeitenden Materials gegenüber den bisherigen Verfahren vereinfacht. Zudem lassen sich unterschiedliche Schichtdicken mit, beispielsweise gegenüber der Vertikalverzinkung, einfachen Vorrichtungen erstellen, die des Weiteren eine hohe Durchlaufgeschwindigkeit bei hoher Qualität der erstellten Verzinkung gewährleisten.

Vorzugsweise ist das Durchlaufverfahren ein Sendzimirverfahren. Bei diesem Verfahren durchläuft das metallische Flachmaterial kontinuierlich einen Ofen mit leicht oxidierender Atmosphäre, in dem das auf dem Flachmaterial befindliche Fett entfernt, das Flachmaterial geglüht und schwach oxidiert wird. Anschliessend tritt das Flachmaterial in einen mit Wasserstoff-Stickstoff-Atmosphäre gefüllten Ofen ein, in dem die Oxide während der Wärmebehandlung reduziert werden. Danach gelangt es sofort in ein Zi nkbad. Aluminium-Zugaben können zur Unterdrückung der Bildung einer harten Zink-Eisen-Zwischenschicht beigegeben werden. Das senkrecht austretende oberflächenveredelte Flachmaterial kühlt an Luft ab, um dann aufgehaspelt zu werden. Wesentliche Vorteile des Sendzimirverfahren sind die Variierbarkeit der Schichtdicke der Verzinkung und die Umformbarkeit des oberflächenveredelten Flachmaterials, ohne dass die Beschichtung bei diesem Bearbeitungsvorgang abspringt.

Bevorzugt weist die beim Verzinken aufgebrachte Zinkschicht eine Dicke von 50 µm bis 100 µm, vorzugsweise eine Dicke von 70 µm bis 80 µm, auf. Damit ist ein Schutz des gesamten metallischen Flachmaterials auch bei dessen weiteren Bearbeitung gewährleistet.

Vorteilhafterweise wird vor dem Stanzen der Öffnungen das Flachmaterial in Bänder gespalten. Das metallische Flachmaterial wird vom Stahlhersteller üblicherweise in einer genormten Breite der weiteren Verwendung zur Verfügung gestellt. Die Breite der Bearbeitungsstrasse zur Herstellung der gestanzten Öffnungen weist oftmals eine geringere Breite als das verwendete Rohmaterial auf. Aus diesem Grund wird das Flachmaterial zuvor auf eine gewünschte Breite in einzelne Bänder gespalten, die nachfolgend mit dem erfindungsgemässen Verfahren bearbeitet und oberflächenveredelt werden. Wird das Band zusätzlich umgeformt, entspricht vorzugsweise die Breite des Bandes der Abwicklung der gewünschten Umformung.

Vorzugsweise werden nach dem Stanzen der Öffnungen und vor dem Aufwickeln des Flachmaterials zusätzlich Markierungen an dem Flachmaterial aufgeprägt. Bei der Markierung handelt es sich beispielsweise um eine Kennung des Flachmaterials oder um eine Längenmarkierung, die ein exaktes Ablängen von, mit einer genormten oder herstellungstechnisch festgelegten Länge gefertigten Fertigprodukts dienen.

Alternativ dazu erfolgt die Prägung der Markierungen vor dem Stanzen der Öffnungen, wobei diese Markierungen beispielsweise als Referenzpunkte für die Stanzmaschine dienen können. Insbesondere bei einem automatisierten Ablauf und einem hohen Bedarf an Präzision der Lage der gestanzten Öffnungen werden die Markierungen vorteilhafterweise vor dem Stanzen der Öffnungen an dem Flachmaterial aufgeprägt.

Bevorzugt wird das Flachmaterial nach dem Verzinken des Flachmaterials, und optional vor dem Ablängen des Flachmaterials, in eine Profilform profiliert. Mit dem Durchlaufverfahren und insbesondere bei Verwendung des Sendzimirverfahrens zur Herstellung der Verzinkung lässt sich das Flachmaterial in eine Vielzahl von Profilen umformen, ohne dass die Beschichtung dabei derart beschädigt wird, dass der Korrosionsschutz nicht mehr gewährleistet ist. Als mögliche Profile seien beispielhaft Montageschienen oder geschweisste und/oder gefaltete Hohlträger genannt. Die Profilierung kann einerseits vor oder andererseits nach dem Ablängen des verzinkten Flachmaterials erfolgen und wird durch die örtlichen Begebenheiten und dem vorhandenen Maschinenpark des Profilherstellers bestimmt.

Vorteilhafterweise werden nach dem Verzinken, und optional vor dem Ablängen des Flachmaterials Verzahnungen, insbesondere Rändelungen, an dem Flachmaterial aufgewalzt. Neben Umformen des Flachmaterials kann dieses mit Verzahnungen und Rändelungen versehen, um eine erhöhte Reibung in Längserstreckung der Verzahnung für anschliessende Bauteile oder Anschlusselemente zu schaffen. Die Verzahnungen und die Rändelungen werden an dem verzinkten Flachmaterial, beziehungsweise am zu einem Profil umgeformten Flachmaterial nach der Verzinkung aufprofiliert. Insbesondere wenn das Flachmaterial mit einem Sendzimirverfahren oberflächenveredelt wurde und eine ausreichende Schichtstärke aufweist, bleibt trotz der erstellten Verzahnung, beziehungsweise der erstellten Rändelung der Korrosionsschutz des Flachmaterials und/oder Profils erhalten. Ein Aufbringen eines zusätzlichen Korrosionsschutzes im Bereich der erstellten Verzahnung, beziehungsweise Rändelung kann entfallen.

Bevorzugt werden die Verzahnung, insbesondere die Rändelungen, an den freien Rändern des Flachmaterials aufgewalzt. Ist das verzinkte Flachmaterial zu einer C-förmigen Montageschiene umprofiliert worden, weisen die, die Längsöffnung der Montageschiene bildenden Seiten, freie Ränder auf, an denen ein Hintergreifteil einer Montagemutter angreift. Für den verbesserten Eingriff des Hintergreifteils und der freien Ränder des Profils sind beide Teile an ihren Kontaktflächen mit vorzugsweisen ineinander greifenden Rändelungen versehen.

Vorzugsweise ist ein verzinktes Profil nach dem erfindungsgemässen Verfahren hergestellt. Das mit dem erfindungsgemässen Verfahren oberflächenveredelte Flachmaterial lässt sich in eine Vielzahl von Profilformen profilieren, ohne dass die Verzinkung bei den notwendigen Bearbeitungsvorgängen beschädigt wird und der Korrosionsschutz wiederhergestellt werden muss.

Bevorzugt weist das Profil auf den Flächen und an den gestanzten Kanten eine einheitliche, durchgehende Zinkschicht auf. Mit Ausnahme der Schneidkante vom Ablängen des Profils weisen ebenfalls die freien Ränder des Profils eine einheitliche, durchgehende Zinkschicht auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Einen Querschnitt durch eine, mit dem erfindungsgemässen Verfahren hergestellte Montageschiene; und
- Fig. 2: eine Aufsicht in Richtung II auf die Montageschiene in Fig. 1.

Grundsätzlich sind in den Figuren gleiche Teile mit den gleichen Bezugszeichen versehen.

### Wege zur Ausführung der Erfindung

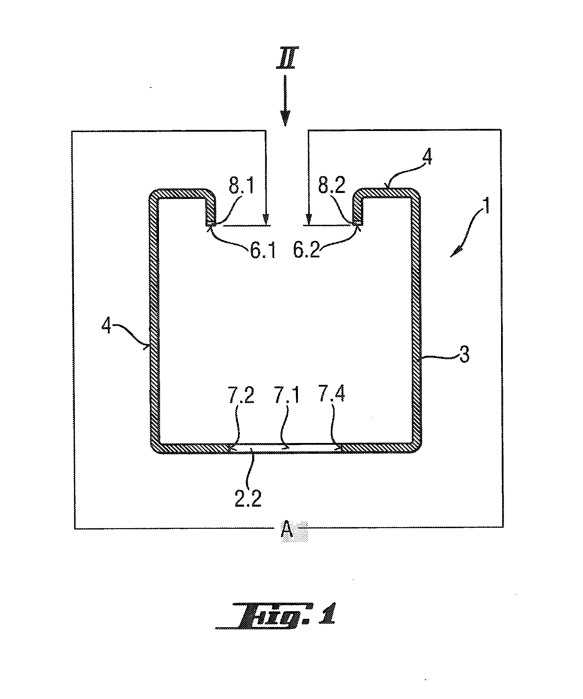

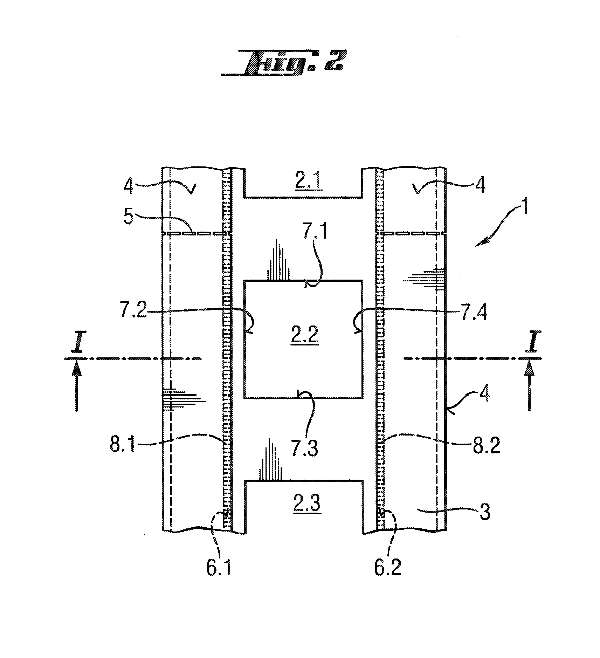

Als Ausführungsbeispiel des erfindungsgemässen Verfahrens wird die He rstellung einer C-förmigen, mit Öffnungen versehene Montagesch iene 1 beschrieben, die in Fig. 1 im Querschnitt (entlang der Linie I-I in Fig. 2) und in Fig. 2 in der Aufsicht gezeigt ist.

Ein unbeschichtetes Stahlblech wird aufgerollt auf einen Haspel vom Stahlhersteller an den Profilhersteller geliefert. In einem ersten Schritt wird das Stahlblech in Bänder 3 gespalten, wobei die Breite der erstellten Bänder 3 der Abwicklung A entspricht, welche die Montageschiene 1 als Fertigprodukt aufweist. Anschliessend werden die Öffnungen, z. B. die Öffnungen 2.1 bis 2.3 in das Band 3 gestanzt. Zusätzlich wird bei diesem Ausführungsbeispiel an der Seite, die der Aussenseite 4 der fertig hergestellten Montageschiene 1 entspricht, jeweils im Abstand von einem Meter Länge eine Markierung 5 aufgeprägt. Nach diesen Bearbeitungsgängen wird das gestanzte und geprägte Band 3 wieder auf einen Haspel aufgerollt und, sofern der Profilhersteller nicht über eine geeignete Verzinkungsanlage verfügt, wird dieser Haspel in eine Verzinkerei zur Oberflächenveredelung des Bandes 3 transportiert.

Die Verzinkungsanlage ist zur Durchführung des Sedzmierverfahrens ausgebildet und umfasst ein Rollenwerk, das ein mehrmaliges Eintauchen des zu verzinkenden Bandes ermöglicht. Die erstellte Dicke der Zinkschicht liegt bei etwa 75 µm. Da dieser Verfahrensschritt nach der Spaltung und Stanzung des Stahlblechs erfolgt, sind alle Kanten, wie z. B. die freien Ränder 6.1 und 6.2 sowie die Öffnungsränder, z. B. die Ränder 7.1 bis 7.4 der Öffnung 2.2, von der Korrosionsschützenden Zinkschicht umgeben. Anschliessend wird das verzinkte Band 3 erneut auf einen Haspel aufgerollt und gegebenenfalls wieder zum Profilhersteller transportiert.

Beim Profilhersteller werden die freien Ränder 6.1 und 6.2 mit einer Rändelung 8.1, bzw. 8.2 versehen. Anschliessend wird das Band 3 in diversen Umformschritten in die C-förmige Montageschiene 1 profiliert. Am Ende der Umformung wird die Montageschiene 1 auf die gewünschte Länge abgelängt und die dabei entstehenden Schnittkanten an der Montageschiene 1 mit einem Korrosionsschutz versehen.

Zusammenfassend ist festzustellen, dass ein Verfahren geschaffen wurde, mit dem eine kostengünstige Oberflächenveredelung eines mit Öffnungen versehenen, metallischen Flachmaterials erfolgen kann, wobei die Anzahl der beim Bearbeitungsvorgang entstehenden, ungeschützten Kanten und deren Nachbehandlung auf ein Minimum reduziert ist.

## Patentansprüche

1. Verfahren zur Herstellung eines verzinkten und mit Öffnungen versehenen metallischen Flachmaterials beinhaltend folgende Verfahrensschritte:
a) Stanzen der Öffnungen (2.1, 2.2, 2.3) in das Flachmaterial;
b) anschliessend Verzinken des Flachmaterials in einem Durchlaufverfahren; und
c) Ablängen des Flachmaterials auf die gewünschte Länge;
wobei an dem Flachmaterial nach dem Verzinken des Flachmaterials Verzahnungen aufgewalzt werden.

2. Verfahren nach Anspruch 1, **dadurch gekennzeichnet, dass** das Durchlaufverfahren ein Sendzimirverfahren ist

3. Verfahren nach Anspruch 1 oder 2, **dadurch gekennzeichnet, dass** die beim Verzinken aufgebrachte Zinkschicht eine Dicke von 50 µm bis 100 µm, vorzugsweise eine Dicke von 70 µm bis 80 µm, aufweist.

4. Verfahren nach einem der Ansprüche 1 bis 3, **dadurch gekennzeichnet, dass** vor dem Stanzen der Öffnungen (2.1, 2.2, 2.3) das Flachmaterial in Bänder (3) gespalten wird.

5. Verfahren nach einem der Ansprüche 1 bis 4, **dadurch gekennzeichnet, dass** nach dem Stanzen der Öffnungen (2.1, 2.2, 2.3) und vor dem Aufwickeln des Flachmaterials zusätzlich Markierungen (5) an dem Flachmaterial aufgeprägt werden.

6. Verfahren nach einem der Ansprüche 1 bis 4, **dadurch gekennzeichnet, dass** vor dem Stanzen der Öffnungen (2.1, 2.2, 2.3) zusätzlich Markierungen (5) an dem Flachmaterial aufgeprägt werden.

7. Verfahren nach einem der Ansprüche 1 bis 6, **dadurch gekennzeichnet, dass** das Flachmaterial nach dem Verzinken des Flachmaterials, und optional vor dem Ablängen des Flachmaterials, in eine Profilform (1) profiliert wird.

8. Verfahren nach einem der Ansprüche 1 bis 7, **dadurch gekennzeichnet, dass** die Verzahnungen vor dem Ablängen des Flachmaterials aufgewalzt werden und/oder dass die Verzahnungen Rändelungen (8.1, 8.2) sind.

9. Verfahren nach einem der vorstehenden Ansprüche, **dadurch gekennzeichnet, dass** die Verzahnungen, insbesondere die Rändelungen (8.1, 82), an den freien Rändern (6.1, 6.2) des Flachmaterials aufgewalzt werden.

10. Verzinktes Profil, **dadurch gekennzeichnet, dass** das Profil (1) nach einem Verfahren nach einem der Ansprüche 7 bis 9 hergestellt ist.

11. Verzinktes Profil nach Anspruch 10, **dadurch gekennzeichnet, dass** das Profil auf den Flächen und an den gestanzten Kanten eine einheitliche, durchgehende Zinkschicht aufweist.

## Claims

1. Process for the fabrication of galvanized metallic flat material provided with openings, comprising the following process steps:
a) punching the openings (2.1, 2.2, 2.3) into the flat material;
b) then galvanizing the flat material in a through-feed process; and
c) cutting off the flat material to the desired length;
toothing being rolled on to the flat material after the flat material has been galvanized.

2. Process according to Claim 1, **characterized in that** the through-feed process is a Sendzimir process.

3. Process according to Claim 1 or Claim 2, **characterized in that** the zinc coating applied in the galvanizing process has a thickness of from 50 µm to 100 µm and preferably a thickness of from 70 µm to 80 µm.

4. Process according to any one of Claims 1 to 3, **characterized in that** the flat material is split into strips (3) before the openings (2.1, 2.2, 2.3) are punched.

5. Process according to any one of Claims 1 to 4, **characterized in that** in addition, marks (5) are stamped on the flat material after the openings (2.1, 2.2, 2.3) have been punched and before the flat material is coiled.

6. Process according to any one of Claims 1 to 4, **characterized in that** in addition, marks (5) are stamped on the flat material before the openings (2.1, 2.2, 2.3) are punched.

7. Process according to any one of Claims 1 to 6, **characterized in that** after the flat material has been galvanized, and optionally before it is cut to length, the flat material is formed into a structural shape (1).

8. Process according to any one of Claims 1 to 7, **characterized in that** the toothing is rolled on before the flat material is cut to length, and/or **in that** the toothing is in the form of knurling (8.1, 8.2).

9. Process according to any one of the preceding claims, **characterized in that** the toothing, and in particular the knurling (8.1, 8.2), is rolled on to the free margins (6.1, 6.2) of the flat material.

10. Galvanized structural section **characterized in that** the section (1) is fabricated by a process according to any one of Claims 7 to 9.

11. Galvanized structural section according to Claim 10, **characterized in that** the section has a uniform, continuous zinc coating on its surfaces and punched edges.

## Revendications

1. Procédé de fabrication d'un matériau plat métallique zingué et muni d'ouvertures, comportant les étapes de procédé suivantes consistant à :
a) poinçonner les ouvertures (2.1, 2.2, 2.3) dans le matériau plat,
b) zinguer ensuite le matériau plat dans un procédé continu, et
c) découper le matériau plat à la longueur voulue,
dans lequel des dentures sont laminées sur le matériau plat après le zingage du matériau plat.

2. Procédé selon la revendication 1, **caractérisé en ce que** le procédé continu est un procédé Sendzimir.

3. Procédé selon la revendication 1 ou 2, **caractérisé en ce que** la couche de zinc appliquée lors du zingage a une épaisseur de 50 µm à 100 µm, de préférence une épaisseur de 70 µm à 80 µm.

4. Procédé selon l'une des revendications 1 à 3, **caractérisé en ce que** le matériau plat est fendu en bandes (3) avant le poinçonnage des ouvertures (2.1, 2.2, 2.3).

5. Procédé selon l'une des revendications 1 à 4, **caractérisé en ce que** des marquages (5) sont de plus empreints sur le matériau plat après le poinçonnage des ouvertures (2.1, 2.2, 2.3) et avant l'enroulement du matériau plat.

6. Procédé selon l'une des revendications 1 à 4, **caractérisé en ce que** des marquages (5) sont de plus empreints sur le matériau plat avant le poinçonnage des ouvertures (2.1, 2.2, 2.3).

7. Procédé selon l'une des revendications 1 à 6, **caractérisé en ce que** le matériau plat est profilé en une forme profilée (1) après le zingage du matériau plat, et facultativement avant la découpe à longueur du matériau plat.

8. Procédé selon l'une des revendications 1 à 7, **caractérisé en ce que** les dentures sont laminées avant la découpe à longueur du matériau plat et/ou **en ce que** les dentures sont des moletages (8.1, 8.2).

9. Procédé selon l'une des revendications précédentes, **caractérisé en ce que** les dentures, en particulier les moletages (8.1, 8.2), sont laminés sur les bords libres (6.1, 6.2) du matériau plat.

10. Profilé zingué, **caractérisé en ce que** le profil (1) est fabriqué selon un procédé selon l'une des revendications 7 à 9.

11. Profilé zingué selon la revendication 10, **caractérisé en ce que** le profilé a une couche de zinc continue uniforme sur les surfaces et sur les arêtes poinçonnées.
